Europäisches Patentamt

European Patent Office

Office européen des brevets

(19)

(11) **EP 0 912 920 B1**

(12) **FASCICULE DE BREVET EUROPEEN**

(45) Date de publication et mention
de la délivrance du brevet:
**24.05.2000 Bulletin 2000/21**

(21) Numéro de dépôt: **97935598.9**

(22) Date de dépôt: **22.07.1997**

(51) Int Cl.⁷: $G06F\ 1/00$, $G11B\ 20/00$

(86) Numéro de dépôt international:
**PCT/FR97/01362**

(87) Numéro de publication internationale:
**WO 98/04966 (05.02.1998 Gazette 1998/05)**

(54) **SYSTEME DE STOCKAGE SECURISE DE DONNEES SUR CD-ROM**

SYSTEM ZUR SICHEREN SPEICHERUNG VON DATEN AUF EINER CD-ROM

SYSTEM FOR SECURE DATA STORAGE ON CD-ROM

(84) Etats contractants désignés:
**AT BE DE DK ES FR GB GR IT NL**

(30) Priorité: **26.07.1996 FR 9609443**

(43) Date de publication de la demande:
**06.05.1999 Bulletin 1999/18**

(73) Titulaire: **OBERTHUR CARD SYSTEMS SA**
**75017 Paris (FR)**

(72) Inventeurs:
• **DEVAUX, François, Thomson-CSF S.C.P.I.**
**F-94117 Arcueil Cedex (FR)**
• **HUOT, Jean-Claude, Thomson-CSF S.C.P.I.**
**F-94117 Arcueil Cedex (FR)**

(74) Mandataire: **Beylot, Jacques et al**
**Thomson-CSF Propriété Intellectuelle,**
**13, Avenue du Président Salvador Allende**
**94117 Arcueil Cédex (FR)**

(56) Documents cités:
**WO-A-89/12890         WO-A-96/29699**
**DE-A- 4 307 395       FR-A- 2 643 475**

**Description**

La présente invention concerne la protection de la confidentialité de données stockées sur un CD-Rom.

La seule possibilité pour sauvegarder la confidentialité de données stockées sur un CD-Rom est le cryptage. Cependant, cette protection n'est réellement satisfaisante que dans la mesure où la clé de décryptage reste inaccessible de l'utilisateur, ce qui n'est pas le cas lorsque la clé de décryptage est stockée sur le CD-Rom ou fournie à l'utilisateur par un autre biais. De plus il existe souvent un risque important de piratage de la clé de décryptage au niveau du circuit électronique de décryptage lui-même, qu'il soit situé dans le lecteur de CD-Rom ou en aval.

Diverses tentatives ont déjà été faites pour résoudre ce problème.

Dans le cas des cassettes ou des disquettes magnétiques qui sont enfermées dans un boîtier inamovible, il est connu, par la demande de brevet internationale WO-A-89/12890, d'équiper le boîtier d'une puce électronique pourvue de contacts électriques. Les données sont codées sur le support d'enregistrement, que ce soit une cassette ou une disquette magnétique, et décodées par l'intermédiaire de la puce électronique équipant le boîtier. Ce genre de protection n'est pas utilisable avec un CD-Rom car celui-ci n'est pas présenté dans un boîtier inamovible. En outre, il n'est pas parfaitement sûr car la clé de décodage doit être connue d'un utilisateur autorisé qui peut en faire profiter à loisir d'autres utilisateurs même non autorisés possédant le lecteur adéquat.

Dans le cas de CD-Rom, il est connu par la demande de brevet allemand DE-A-43 07 395, de coder les données enregistrées sur le CD-Rom à l'aide d'une clé ou mot de passe et de stocker le mot de passe dans une carte à puce. Cela permet, a priori, d'éviter l'utilisation des données du CD-Rom par des utilisateurs n'étant pas en possession de la carte à puce. Il subsiste cependant un risque de piratage par le fait que le mot de passe n'est pas réellement en sécurité à l'intérieur du lecteur de CD-Rom ou du CD-Rom lui-même.

La présente invention a pour but de remédier à ces divers inconvénients et d'assurer une protection efficace de la confidentialité de données stockées sur un CD-Rom.

Elle a pour objet un système de stockage sécurisé de données sur CD-Rom comportant un CD-Rom sur lequel sont stockées des données cryptées au moins en partie avec un algorithme cryptographique ayant une clé de décryptage K et un lecteur de CD-Rom. Ce système de stockage sécurisé de données est remarquable en ce qu'il comporte en outre :

- un microcircuit électronique de décryptage enrobé dans ledit CD-Rom,
- des moyens d'échange d'informations entre le lecteur de CD-Rom et le microcircuit électronique de décryptage enrobé dans le CD-Rom,

- une carte à puce renfermant au moins une partie $K_1$ de la clé de décryptage K, la partie restante éventuelle $K_2$ de la clé de décryptage K figurant dans le microcircuit électronique de décryptage enrobé dans le CD-Rom et
- des moyens sécurisés d'échange d'informations entre la carte à puce et le microcircuit électronique enrobé dans le CD-Rom.

Grâce à ce système, la confidentialité des données stockées sur CD-Rom est assurée au moyen d'un cryptage dont la clé de décryptage n'est jamais accessible en clair à l'utilisateur ce qui réduit dans une large mesure les risques de fraude.

Le microcircuit électronique de décryptage enrobé dans le CD-Rom est avantageusement pourvu d'une antenne inductive ou capacitive permettant d'assurer depuis l'extérieur du CD-Rom, en l'absence de tout contact, à la fois son alimentation électrique et des échanges d'informations.

Le lecteur de CD-Rom est avantageusement pourvu d'un connecteur de carte à puce et d'un circuit électronique assurant, outre la lecture du CD-Rom, la gestion des liaisons d'échange d'informations entre lui-même, le microcircuit électronique enrobé dans le CD-Rom et la carte à puce.

La carte à puce est avantageusement pourvue d'un code d'identification de son propriétaire qui doit obligatoirement lui parvenir en début de session pour qu'elle accepte de communiquer avec l'extérieur, tandis que le lecteur de CD-Rom est équipé de moyens de surveillance de la présence ininterrompue d'une carte à puce dans son connecteur de carte à puce tout au long d'un décryptage effectué par le microcircuit électronique enrobé dans le CD-Rom.

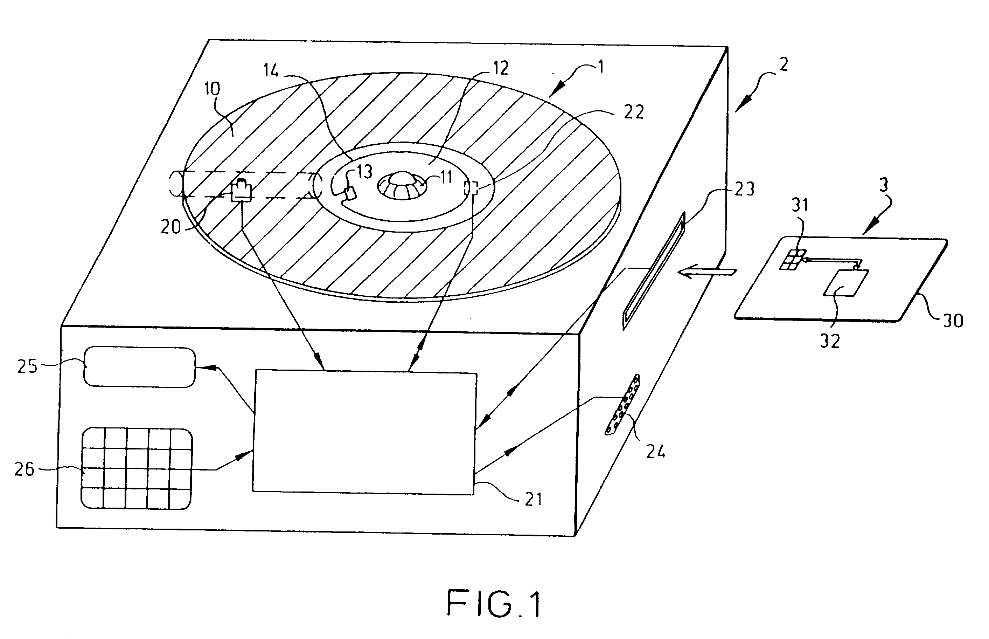

D'autres caractéristiques et avantages de l'invention ressortiront de la description ci-après d'un mode de réalisation de l'invention donné à titre d'exemple. Cette description sera faite en regard du dessin dans lequel la figure unique illustre, de manière schématique, l'architecture du système de stockage sécurisé de données sur CD-Rom selon l'invention.

On distingue sur cette figure un CD-Rom 1 posé sur un lecteur de CD-Rom 2 équipé d'un connecteur de carte à puce 23 dans lequel vient s'insérer une carte à puce 3.

Le CD-Rom 1 présente, comme tout CD-Rom classique, une plage annulaire gravée 10 où sont stockées les données, un trou de centrage 11 et, autour de ce trou de centrage 11, une plage centrale 12 permettant sa préhension et son entraînement en rotation par le mécanisme d'un lecteur de CD-Rom. Il se différencie des CD-Rom classiques par le fait que les données qu'il stocke sont cryptées par un algorithme à clé K et donc non directement exploitables, et qu'il présente un microcircuit électronique de décryptage 13 avec une antenne inductive 14 enrobés dans le plastique de sa plage centrale 12. Le microcircuit électronique 13 de décryptage et son antenne inductive 14 relèvent, par leur conception, de la technique des cartes à puce sans contact. L'antenne 14, qui pourrait également être capacitive, permet à la fois l'alimentation électrique du microcircuit électronique de décryptage 13 et des échanges d'informations avec ce microcircuit électronique de décryptage 13 depuis l'extérieur du CD-Rom. Le microcircuit électronique de décryptage 13 comporte un microcontrôleur pourvu d'un port série d'entrée-sortie raccordé à l'antenne 14 et de mémoires vive de type RAM et morte de type ROM et éventuellement EEPROM. Il est programmé pour réclamer la clef de décryptage K ou la partie qui lui manque $K_1$ de cette clé dés sa mise sous tension, la recevoir sous une forme sécurisée, la mettre en mémoire RAM, recevoir les données cryptées, les décrypter avec la clef de cryptage K obtenue stockée en mémoire RAM et retourner les données décryptées pour qu'elles soient exploitées. Il ne sera pas décrit en détail car il relève de la pratique habituelle pour un technicien du cryptage et du décryptage de données.

Le lecteur de CD-Rom 2 comporte les éléments habituels d'un lecteur de CD-Rom, dont le moteur d'entraînement en rotation du CD-Rom lu, la tête optique de lecture 20 à diode Laser et photodétecteur montée sur un équipage mobile se déplaçant selon un rayon du CD-Rom lu et un circuit électronique 21 assurant la gestion des déplacements de l'équipage mobile de sa tête de lecture 20 et une mise en forme des signaux issus de cette tête de lecture. En plus de ces éléments, il est pourvu d'un capteur 22 coopérant avec l'antenne 14 du circuit électronique de décryptage 13 enrobé dans le CD-Rom 1, du connecteur de carte à puce 23, d'un connecteur de communication extérieure 24, d'un afficheur 25 et d'un clavier 26. Son circuit électronique 21 assure, en plus des tâches habituelles de lecture d'un CD-Rom :

- la gestion du capteur 22 coopérant avec l'antenne 14 du circuit électronique de décryptage 13 enrobé dans le CD-Rom 1 pour assurer l'alimentation et les échanges d'informations avec ce dernier circuit de décryptage 13,
- la gestion du connecteur 23 de carte à puce de manière à assurer l'alimentation d'une carte à puce raccordée 3 et les échanges d'informations avec cette dernière,
- la gestion du connecteur de communication extérieure 24 afin de délivrer, à un système de traitement déporté, des données exploitables lues sur le CD-Rom 1 et décryptées par le microcircuit électronique de décryptage 13 enrobé dans le CD-Rom 1, avec l'aide d'une clé de décryptage fournie par la carte à puce 3,
- la gestion de l'afficheur 25, et
- la gestion du clavier 26.

La carte à puce 3 comporte une carte support plastifiée 30 pourvue d'un ensemble de contacts 31 raccordés à un microcircuit électronique 32 qui est représenté, par facilité, au milieu de la carte mais qui est en réalité enterré sous les contacts 31. Le microcircuit 32 renferme principalement, un microcontrôleur (CPU) en liaison avec un port série d'entrée-sortie (SIO) raccordé aux contacts 31 et avec de la mémoire en partie vive (RAM) et en partie permanente, à la fois de type morte non réinscriptible (ROM) et de type morte réinscriptible (EEPROM) destinée au stockage d'une partie au moins $K_1$ de la clé de décryptage et d'un programme gérant le protocole de communication sous une forme sécurisée de la partie $K_1$ de clé de cryptage résidant dans la carte à puce 3.

Au démarrage d'une lecture de données cryptées sur le CD-Rom 1, le lecteur de CD-Rom 2 alimente le microcircuit électronique de décryptage 13 enrobé dans le CD-Rom 1 qui demande alors la clé de cryptage K ou sa partie manquante $K_1$. En réponse, le lecteur de CD-Rom 2 met le microcircuit électronique de décryptage 13 enrobé dans le CD-Rom 1 en communication avec la carte à puce 3. Cette dernière réclame un code d'identification de la part de l'opérateur avant d'accepter le dialogue. Si sa réclamation est satisfaite positivement par l'opérateur qui tape au clavier 26 son code d'identification, la carte à puce 3 défère à la demande du microcircuit électronique de décryptage 13 enrobé dans le CD-Rom 1 et lui communique, sous forme sécurisée, la clé de cryptage K ou sa partie manquante $K_1$. Le microcircuit électronique de décryptage 13 enrobé dans le CD-Rom 1 place alors la clé de cryptage complète K dans sa mémoire vive et informe le lecteur de CD-Rom 2 qu'il est près au décryptage. Le lecteur de CD-Rom 2 établit alors une communication ascendante et descendante avec le microcircuit électronique de décryptage 13 enrobé dans le CD-Rom 1. Au cours de cette communication le lecteur de CD-Rom 2 fait parvenir au microcircuit électronique de décryptage 13 enrobé dans le CD-Rom 1 les données cryptées qu'il lit dans le CD-Rom 1. Le microcircuit électronique de décryptage 13 enrobé dans le CD-Rom 1 décrypte les données reçues à l'aide de la clé de décryptage K présente dans sa mémoire vive et les retourne en clair au lecteur de CD-Rom 2 qui les dirige sur son connecteur de communication extérieure 24 pour qu'elles soient exploitées. Simultanément avec l'établissement de toute liaison de communication avec le lecteur de CD-Rom 2, le circuit de décryptage 13 enrobé dans le CD-Rom 1 teste la présence effective de la carte à puce 3 dans son connecteur 23 et interrompt son fonctionnement en cas de retrait de la carte à puce, ce qui provoque la perte de la clé de décryptage K par le microcircuit de décryptage 13 enrobé dans le CD-Rom 1 et empêche de poursuivre un décryptage après retrait de la carte à puce.

La procédure d'authentification du porteur de la carte à puce préalable à tout dialogue avec cette dernière qui s'effectue par une demande de code secret ou "PIN CODE" à taper au clavier suivie d'une vérification de ce code secret est une procédure classique utilisée avec les cartes à puce employées pour des transactions et ne sera pas détaillée ici.

Le transfert sécurisé de tout ou partie de la clé de décryptage K dans la mémoire vive du microcircuit de décryptage 13 enrobé dans le CD-Rom 1 peut se faire selon le protocole suivant :

- Au cours d'une première étape, le microcircuit de décryptage 13 enrobé dans le CD-Rom 1 émet à l'intention de la carte à puce 3 une demande d'échange d'informations.
- Au cours d'une deuxième étape, la carte à puce 3, après un déroulement favorable de la procédure d'identification du porteur, répond par un signal d'acquiescement.
- Au cours d'une troisième étape, le microcircuit de décryptage 13 détecte le signal d'acquiescement de la carte à puce, engendre un aléa A (nombre binaire aléatoire) qu'il code avec une clé de cryptage-décryptage $C_1$ d'un algorithme cryptographique dissymétrique destiné à la sécurisation de la transmission et envoie à la carte à puce 3 sous forme d'un message crypté $C_1(A)$.
- Au cours d'une quatrième étape, la carte à puce 3 reçoit ce message crypté, le décrypte à l'aide d'une autre clé, en sa possession, de cryptage-décryptage $C_2$ de l'algorithme de cryptographique dissymétrique de transmission utilisé par le microcircuit de décryptage 13, et obtient l'aléa en clair :

$$C_2(C_1(A)) = A$$

- Au cours d'une cinquième étape, la carte à puce 3 réalise une opération logique de "ou exclusif" entre l'aléa A reçu du microcircuit de décryptage 13 et la clé de décryptage K des données du CD-Rom 1, ou une partie $K_1$ de cette clé manquant au microcircuit de décryptage et connue de la seule carte à puce 3. Pour simplifier, on suppose ici que la totalité de la clé K manque au microcircuit de décryptage 13 si bien que la carte à puce effectue l'opération :

$$A \oplus K = D$$

- Au cours d'une sixième étape, la carte à puce 3 code le résultat de cette opération logique avec la clé de cryptage-décryptage de transmission $C_2$ en sa possession et le transmet au microcircuit de décryptage 3 sous la forme :

$$C_2(D) = C_2(A \oplus K)$$

- Au cours d'une septième étape, le microcircuit de décryptage 13 reçoit ce message, le décrypte avec sa clé de cryptage-décryptage $C_1$ et obtient le message :

$$C_1(C_2(D)) = D$$

- Au cours d'une huitième et dernière étape, le microcircuit de décryptage 13 récupère la clé de décryptage K des données du CD-Rom 1 en soumettant le message reçu de la carte à puce 3 et décrypté à une opération logique de "ou exclusif" avec l'aléa A qu'il a engendré au départ :

$$D \oplus A = (A \oplus K) \oplus A = K$$

La procédure de transfert d'information de la carte à puce 3 en direction du microcircuit de décryptage 13 qui vient d'être décrite est sécurisée non seulement parce que les informations ne sont pas transférées en clair mais aussi parce que le cryptage de la transmission est partagé entre les deux intervenants et dépend d'un aléa qui change à chaque session.

Bien sûr, le protocole de communication sécurisée entre le microcircuit électronique de décryptage 13 enrobé dans le CD-Rom 1 et la carte à puce 3 qui vient d'être décrit, n'est qu'un exemple et peut être remplacé par d'autres protocole utilisant des algorithmes de cryptage plus complexes comme le RSA, le DSA, etc...

Les échanges d'informations avec la carte à puce 3 se font, selon le protocole défini dans la norme ISO 7816/4, au moyen d'une commande "execute" lorsqu'il s'agit d'une transmission en direction de la carte à puce, et d'une commande "get challenge" lorsqu'il s'agit d'une transmission en provenance de la carte à puce.

Une manière de vérifier la présence de la carte à puce 3 dans le connecteur de carte à puce 23 du lecteur de carte à puce 2 tout au long d'une opération de lecture et décryptage des données du CD-Rom 1 consiste à engendrer périodiquement des aléas dans le microcircuit de décryptage 13, à les envoyer à la carte à puce 3 pour qu'elle les signe, c'est-à-dire qu'elle les crypte avec la clé de cryptage-décryptage $C_2$ de transmission en sa possession, puis les retourne, à décrypter les signatures de la carte à puce 3 avec la clé de cryptage-décryptage $C_1$ de transmission en possession du microcircuit électronique de décryptage 13 enrobé dans le CD-Rom 1 et à vérifier qu'elles correspondent bien à l'aléa envoyé. Comme aléas utilisés au cours de cette procédure de vérification de la présence de la carte à puce 3, le microcircuit de décryptage 13 enrobé dans le CD-Rom 1 pourra utiliser le résultat d'une opération logique de type "ou exclusif" entre les données cryptées et les données décryptées qu'il est en train de manipuler.

Avec le système de stockage sécurisé de données sur CD-Rom qui vient d'être décrit, la simple disponibilité du CD-Rom et de son lecteur spécialisé ne permet plus d'exploiter les données en dehors d'une attaque cryptographique classique dont la difficulté est fonction de l'algorithme de cryptage choisi. En effet, il manque la clé ou une partie de la clé de décryptage qui est stockée au sein de la carte à puce et qui n'est jamais accessible en clair pour l'utilisateur. Le fait de disposer en plus de la carte à puce n'est pas suffisant puisqu'il faut aussi connaître le code d'identification ou "PIN CODE" pour démarrer les opérations de décryptage, que celle-ci soit ou non restée dans le lecteur de CD-Rom au cours d'une précédente session.

On pourra prendre différentes précautions complémentaires, comme le changement régulier du code d'identification du porteur de la carte à puce ou "PIN CODE" ou la limitation du nombre de tentatives infructueuses d'utilisation de la carte à puce grâce à un processus d'auto-inhibition de cette dernière. De plus, il peut être prévue une procédure d'initialisation lors d'une première lecture du CD-Rom, alors que celui-ci et sa carte à puce de clé de décryptage de données ne sont pas encore personnalisés. A la première lecture du CD-Rom, avec la carte à puce enfichée, la carte à puce demande à l'utilisateur de choisir un code d'identification qu'elle mémorise de manière définitive. Elle dialogue ensuite avec le microcircuit électronique enrobé dans le CD-Rom pour choisir les clés de cryptage-décryptage de leur liaison de transmission et se les répartir entre eux. A partir de ce moment, les secrets répartis entre le microcircuit électronique de décryptage enrobé dans le CD-Rom, la carte à puce de clé de décryptage de données et l'utilisateur rendent le fonctionnement du système impossible en l'absence de l'un de ses éléments et de la connaissance du code d'identification de l'utilisateur.

Le système qui vient d'être décrit est particulièrement intéressant, pour protéger des données sensibles concernant l'activité d'une entreprise, stockées sur un CD-Rom en vue de leur exploitation sur des ordinateurs personnels portables par un personnel habilité astreint à des déplacements fréquents.

Bien entendu, la présente invention n'est pas limitée à l'exemple décrit mais elle est susceptible de nombreuses variantes ressortant de la pratique courante de l'homme du métier.

**Revendications**

1. Système de stockage sécurisé de données sur CD-Rom comportant un CD-Rom (1) sur lequel sont stockées des données cryptées au moins en partie avec un algorithme cryptographique ayant une clé de décryptage K et un lecteur de CD-Rom (2) caractérisé en ce qu'il comporte en outre :

   - un microcircuit électronique de décryptage (13) enrobé dans ledit CD-Rom (1),
   - des moyens d'échange d'informations entre ledit lecteur de CD-Rom (2) et ledit microcircuit électronique de décryptage (13) enrobé dans ledit CD-Rom (1),
   - une carte à puce (3) renfermant au moins une partie $K_1$ de la clé de décryptage K, la partie restante éventuelle $K_2$ de la clé de décryptage K figurant dans ledit microcircuit électronique de décryptage (13) enrobé dans ledit CD-Rom (1) et
   - des moyens sécurisés d'échange d'informations entre ladite carte à puce (3) et ledit microcircuit électronique (13) enrobé dans ledit CD-Rom (1).

2. Système selon la revendication 1, caractérisé en ce que ledit microcircuit électronique de décryptage (13) enrobé dans ledit CD-Rom (1) est pourvu d'une antenne (14) assurant, sans présence de contact, à la fois l'alimentation électrique dudit microcircuit de décryptage (13) depuis l'extérieur et les échanges d'informations avec l'extérieur.

3. Système selon la revendication 1, caractérisé en ce qu'il comporte en outre des moyens d'authentification d'un utilisateur autorisé de ladite carte à puce (3) imposant en préalable à un échange d'informations avec ladite carte à puce (3), la fourniture par l'utilisateur d'un code secret d'identification.

4. Système selon la revendication 1, caractérisé en ce qu'il comporte en outre des moyens de surveillance de la présence ininterrompue de ladite carte à puce (3) pendant le fonctionnement dudit microcircuit électronique de décryptage (13) enrobé dans ledit CD-ROM (1).

5. Système selon la revendication 3, caractérisé en ce que ladite carte à puce (3) est pourvue de moyens d'inhibition limitant le nombre de tentatives infructueuses d'introduction du code secret d'identification.

6. Système selon la revendication 1, caractérisé en ce qu'il comporte des moyens d'initialisation permettant de personnaliser ladite carte à puce (3) et/ou les moyens sécurisés d'échange d'informations entre ladite carte à puce (3) et ledit microcircuit électronique de décryptage (13) enrobé dans ledit CD-Rom (1) en préalable à une première utilisation.

**Patentansprüche**

1. System zur gesicherten Speicherung von Daten auf einer CD-ROM, mit einer CD-ROM (1), auf der zumindest teilweise mit einem kryptographischen Algorithmus verschlüsselte Daten gespeichert sind, der einen Dechiffrierschlüssel K enthält, und mit einem CD-ROM-Lesegerät (2), dadurch gekennzeichnet, daß es außerdem enthält:

- eine in die CD-ROM (1) eingebettete elektronische Mikroschaltung (13) zur Dechiffrierung,
- Mittel zum Austausch von Informationen zwischen dem CD-ROM-Lesegerät (2) und der in die CD-ROM (1) eingebetteten elektronischen Mikroschaltung (13) zur Dechiffrierung,
- eine Chipkarte (3), die mindestens einen Teil $K_1$ des Dechiffrierschlüssels K enthält, während der eventuell verbleibende Teil $K_2$ des Dechiffrierschlüssels K in der in die CD-ROM (1) eingebetteten elektronischen Mikroschaltung (13) zur Dechiffrierung liegt,
- und gesicherte Informationsaustauschmittel zwischen der Chipkarte (3) und der in die CD-ROM (1) eingebetteten elektronischen Mikroschaltung (13).

2. System nach Anspruch 1, dadurch gekennzeichnet, daß die in die CD-ROM (1) eingebettete elektronische Mikroschaltung (13) zur Dechiffrierung eine Antenne (14) enthält, die ohne galvanischen Kontakt sowohl die elektrische Speisung der Mikroschaltung (13) zur Dechiffrierung als auch die Informationsaustauschvorgänge mit der Außenwelt gewährleistet.

3. System nach Anspruch 1, dadurch gekennzeichnet, daß es außerdem Mittel zur Identifizierung eines autorisierten Benutzers der Chipkarte (3) aufweist, die vor einem Informationsaustausch mit der Chipkarte (3) die Lieferung eines geheimen Identifizierungskodes durch den Benutzer erfordert.

4. System nach Anspruch 1, dadurch gekennzeichnet, daß es außerdem Mittel zur Überwachung der permanenten Präsenz der Chipkarte (3) während des Betriebs der in die CD-ROM (1) eingebetteten elektronischen Mikroschaltung (13) zur Dechiffrierung aufweist.

5. System nach Anspruch 3, dadurch gekennzeichnet, daß die Chipkarte (3) Mittel zur Blockierung aufweist, die die Anzahl der Fehlversuche bei der Eingabe des geheimen Identifizierungskodes begrenzt.

6. System nach Anspruch 1, dadurch gekennzeichnet, daß es Mittel zur Initialisierung aufweist, mit denen die Chipkarte (3) und/oder die gesicherten Mittel zum Austausch von Informationen zwischen der Chipkarte (3) und der in die CD-ROM (1) eingebetteten elektronischen Mikroschaltung 13 zur Dechiffrierung vor einer ersten Benutzung aufweist.

**Claims**

1. System for the secure storage of data on CD-ROM, comprising a CD-ROM (1) on which are stored data encrypted at least in part with a cryptographic algorithm having a decryption key K and a CD-ROM drive (2) characterised in that it furthermore comprises:

- an electronic decryption microcircuit (13) embedded in said CD-ROM (1),
- means of exchanging information between said CD-ROM drive (2) and said electronic decryption microcircuit (13) embedded in said CD-ROM (1),
- a chip card (3) containing at least a part $K_1$ of the decryption key K, with any remaining part $K_2$ of the decryption key K figuring in said electronic decryption microcircuit (13) embedded in said CD-ROM (1), and
- secure means of exchanging information between said chip card (3) and said electronic microcircuit (13) embedded in said CD-ROM (1).

2. System according to claim 1, characterised in that said electronic decryption microcircuit (13) embedded in said CD-ROM (1) is provided with an antenna (14) which caters, without the presence of contact, simultaneously for the electrical power supply to said decryption microcircuit (13) from outside and the exchanges of information with the outside.

3. System according to claim 1, characterised in that it furthermore comprises means for authenticating an authorised user of said chip card (3) which compel the provision by the user of a secret identification code prior to an exchange of information with said chip card (3).

4. System according to claim 1, characterised in that it furthermore comprises means for monitoring the uninterrupted presence of said chip card (3) during the operation of said electronic decryption microcircuit (13) embedded in said CD-ROM (1).

5. System according to claim 3, characterised in that said chip card (3) is provided with disabling means which restrict the number of abortive attempts to input the secret identification code.

6. System according to claim 1, characterised in that it comprises initialisation means making it possible to customise said chip card (3) and/or the secure means for exchanging information between said chip card (3) and said electronic decryption microcircuit (13) embedded in said CD-ROM (1) prior to a first use.

FIG.1